# EUROPEAN PATENT APPLICATION

(11) **EP 4 583 335 A1**
(43) Date of publication of application: **09.07.2025**
(21) Application number: 22957445.4
(22) Date of filing: 01.09.2022
(51) Int. Cl.: H02B 13/035

(54) **GAS INSULATED APPARATUS**

(71) Applicant: MITSUBISHI ELECTRIC CORPORATION, Chiyoda-ku Tokyo 100-8310 (JP)
(72) Inventor: NAKAUCHI, Shinichiro, Tokyo 100-8310 (JP); KUBOTA, Masato, Tokyo 100-8310 (JP)
(74) Representative: Witte, Weller & Partner Patentanwälte mbB
(86) International application number: PCT/JP2022/033024
(87) International publication number: WO 2024/047851

(57) **Abstract**

A gas-insulated device includes a grounded tank divided into multiple zones each filled with gas, and an instrument transformer (50) including, in combination, a current transformer (54) for detecting an anomalous current and a transformer (53) for detecting an anomalous voltage. The instrument transformer (50) includes an insulation spacer (51) that forms the zones, and a main circuit conductor (52) that penetrates through the insulation spacer (51). The current transformer (54) has an annular shape, and the transformer (53) has a shape forming at least part of an annular shape. The current transformer (54) and the transformer (53) are embedded in the insulation spacer (51) to cause the center of the current transformer (54) and the center of the transformer (53) to be positioned on a central axis of the main circuit conductor (52).

## Description

### Field

The present disclosure relates to a gas-insulated device that encloses electrical insulation (hereinafter referred to simply as insulation) gas in a grounded metal tank.

### Background

Some types of gas-insulated devices that enclose insulation gas in a grounded metal tank include an instrument transformer that includes, in combination, a current transformer for detecting an anomalous current and a transformer for detecting an anomalous voltage. In such instrument transformer, an insulation spacer that divides the inside of the tank into multiple zones each filled with gas, the current transformer for detecting an anomalous current, and the transformer for detecting an anomalous anomaly are installed separately.

Separate installation of the insulation spacer, the current transformer, and the transformer requires not only three installation spaces for these components, but also requires spaces for installing members for supporting the current transformer and the transformer. Accordingly, separate installation of the insulation spacer, the current transformer, and the transformer hinders size reduction of the instrument transformer.

Patent Literature 1 discloses an instrument transformer in which the current transformer for detecting an anomalous current is embedded in the insulation spacer. Use of the instrument transformer disclosed in Patent Literature 1 eliminates the need for the space for installation of the member for supporting the instrument current transformer, thereby enabling size reduction of a gas-insulated device as compared to when the insulation spacer and the current transformer for detecting an anomalous current are installed separately.

### Citation List

### Patent Literature

Patent Literature 1: Japanese Patent Application Laid-open No. H06-276629

### Summary of Invention

### Problem to be solved by the Invention

However, the instrument transformer disclosed in Patent Literature 1 does not disclose a method for supporting the transformer for detecting an anomalous voltage. That is, the instrument transformer disclosed in Patent Literature 1 needs to keep a space for installation of a member for supporting the transformer for detecting an anomalous voltage. Thus, the instrument transformer disclosed in Patent Literature 1 needs to further reduce the installation spaces for the current transformer for detecting an anomalous current and for the transformer for detecting an anomalous voltage.

The present disclosure has been made in view of the foregoing, and it is an object of the present disclosure to provide a gas-insulated device including an instrument transformer having reduced installation spaces for the current transformer for detecting an anomalous current and for the transformer for detecting an anomalous voltage.

### Means to Solve the Problem

To solve the problem and achieve the object described above, a gas-insulated device according to the present disclosure includes: a grounded tank divided into multiple zones each filled with gas; and an instrument transformer including, in combination, a current transformer for detecting an anomalous current and a transformer for detecting an anomalous voltage. The instrument transformer includes: an insulation spacer that forms the zones; and a main circuit conductor that penetrates through the insulation spacer. The current transformer has an annular shape, and the transformer has a shape forming at least part of an annular shape. The current transformer and the transformer are embedded in the insulation spacer to cause a center of the current transformer and a center of the transformer to be positioned on a central axis of the main circuit conductor.

### Effects of the Invention

The present disclosure provides an advantage in that a gas-insulated device can be provided that includes an instrument transformer having reduced installation spaces for the current transformer for detecting an anomalous current and for the transformer for detecting an anomalous voltage.

### Brief Description of Drawings

FIG. 1 is a diagram illustrating a configuration of a gas-insulated switchgear according to a first embodiment.
FIG. 2 is a cross-sectional view of an instrument transformer of the gas-insulated switchgear according to the first embodiment.
FIG. 3 is a front view of an insulation spacer of the gas-insulated switchgear according to the first embodiment.
FIG. 4 is a cross-sectional view of the instrument transformer of the gas-insulated switchgear according to a second embodiment.
FIG. 5 is a front view of the insulation spacer of the gas-insulated switchgear according to the second embodiment.
FIG. 6 is a cross-sectional view of the instrument transformer of the gas-insulated switchgear according to a third embodiment.
FIG. 7 is a front view of the insulation spacer of the gas-insulated switchgear according to the third embodiment.
FIG. 8 is a cross-sectional view of the instrument transformer of the gas-insulated switchgear according to a fourth embodiment.

### Description of Embodiments

A gas-insulated device according to embodiments will be described in detail below with reference to the drawings.

### First Embodiment.

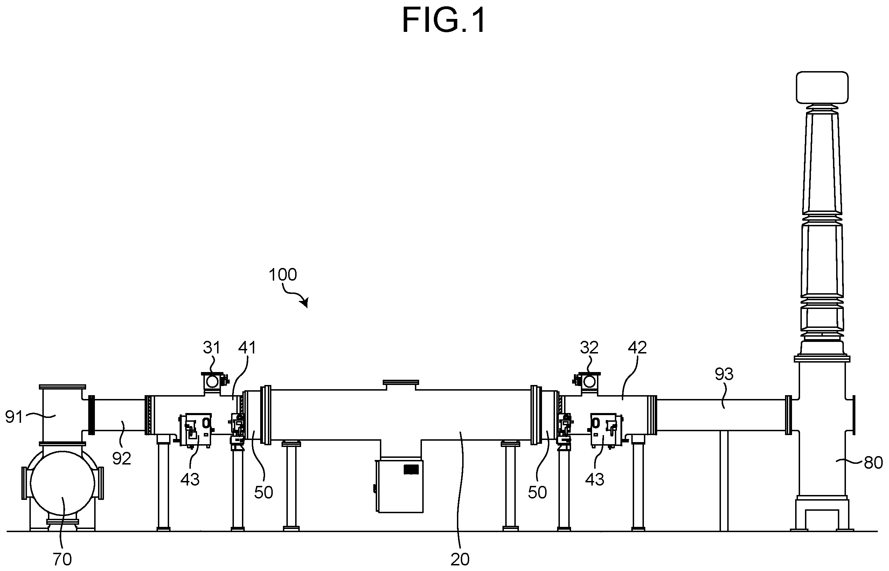

FIG. 1 is a diagram illustrating a configuration of a gas-insulated switchgear according to a first embodiment. A gas-insulated switchgear 100, which is one type of gas-insulated device, includes: a circuit breaker 20; grounded switchgears 31 and 32; disconnectors 41 and 42; an instrument transformer 50; a busbar 70; and a bushing 80. The busbar 70 and the disconnector 41 are connected to each other using connecting busbars 91 and 92. The bushing 80 and the disconnector 42 are connected to each other using a connecting busbar 93. Each of the circuit breaker 20, the grounded switchgears 31 and 32, the disconnectors 41 and 42, the busbar 70, the bushing 80, and the connecting busbars 91, 92, and 93 is housed in a grounded metal tank. The tank housing the circuit breaker 20, the grounded switchgears 31 and 32, the disconnectors 41 and 42, the busbar 70, the bushing 80, and the connecting busbars 91, 92, and 93 is filled with insulation gas.

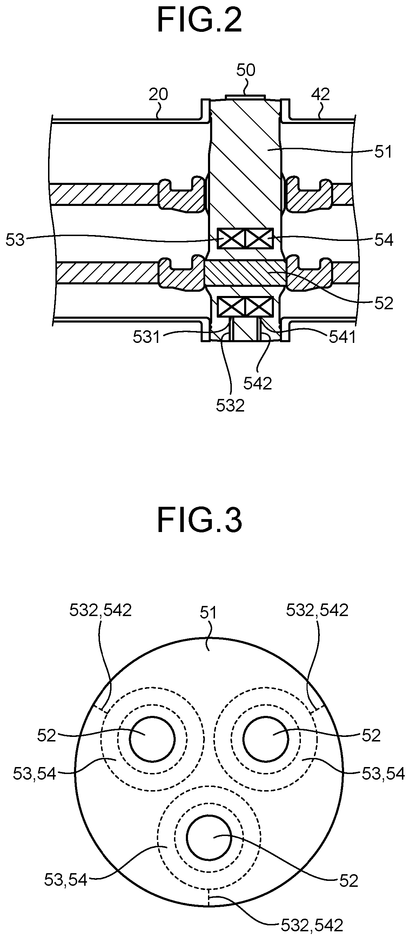

FIG. 2 is a cross-sectional view of the instrument transformer of the gas-insulated switchgear according to the first embodiment. The instrument transformer 50 includes an insulation spacer 51, main circuit conductors 52, transformers 53, and current transformers 54. FIG. 3 is a front view of the insulation spacer of the gas-insulated switchgear according to the first embodiment. The main circuit conductors 52, the transformers 53, and the current transformers 54 are embedded in the insulation spacer 51. The instrument transformer 50 according to the first embodiment includes three of the main circuit conductors 52, three of the transformers 53, and three of the current transformers 54 to conduct three-phase currents having phases different from each other. The transformers 53 and the current transformers 54 each have a ring shape, and are embedded in the insulation spacer 51 to cause the center of each thereof to be positioned on the central axis of a corresponding one of the main circuit conductors 52. The transformers 53 and the current transformers 54 each include a corresponding one of secondary terminals 531 and 541, which are connected to corresponding ones of conductors 532 and 542 drawn from an outer circumferential portion of the insulation spacer 51.

The main circuit conductors 52, the transformers 53, and the current transformers 54 are cast integrally with the insulation spacer 51. The transformers 53 and the current transformers 54 are supported from the outer circumference side of the insulation spacer 51 by support members so as to be coaxial with the main circuit conductors 52 in the mold for casting the insulation spacer 51. In the mold for casting the insulation spacer 51, the support member that supports each of the transformers 53 and the current transformers 54 may be a corresponding one of the conductors 532 and 542 connected to corresponding ones of the secondary terminals 531 and 541 of the transformers 53 and of the current transformers 54. In a state the transformers 53 and the current transformers 54 are supported from the outer circumference side of the insulation spacer 51 by support members so as to be coaxial with the main circuit conductors 52, the main circuit conductors 52, the transformers 53, and the current transformers 54 are integrally cast with the insulation spacer 51 by filling the mold with an insulating material.

In the gas-insulated switchgear 100 according to the first embodiment, the transformers 53 and the current transformers 54 are embedded in the insulation spacer 51. Therefore, a member for supporting each of the transformers 53 and the current transformers 54 is unnecessary. This enables the gas-insulated switchgear 100 according to the first embodiment to reduce installation spaces for the insulation spacer 51, the current transformers 54, and the transformers 53.

In addition, in the gas-insulated switchgear 100 according to the first embodiment, there is no need to enclose insulation gas in the instrument transformer 50, thus size reduction is achieved and the amount of use of insulation gas is reduced.

Moreover, in the gas-insulated switchgear 100 according to the first embodiment, the transformers 53 and the current transformers 54 are embedded in the insulation spacer 51 in the instrument transformer 50, therefore a work of installation of the transformers 53 and the current transformers 54 to be coaxial with the main circuit conductors 52 during assembly of the gas-insulated switchgear 100 is unnecessary. Thus, the gas-insulated switchgear 100 according to the first embodiment enables a reduction in the number of steps in assembly work and an improvement in workability.

### Second Embodiment.

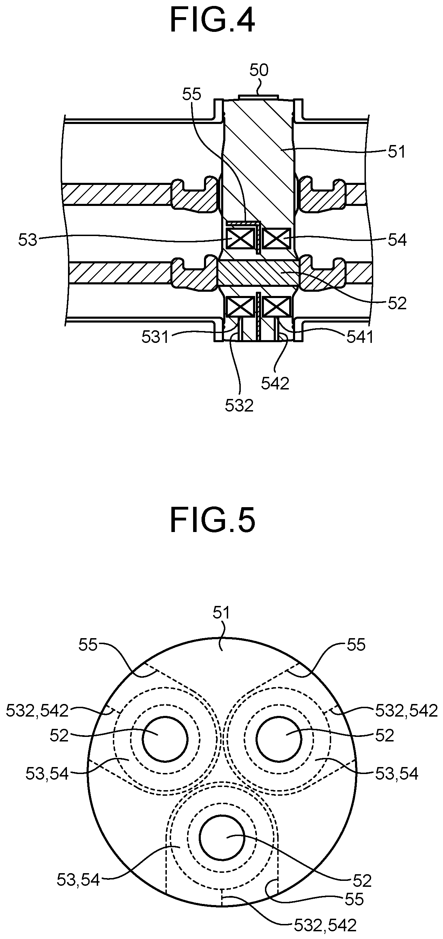

FIG. 4 is a cross-sectional view of the instrument transformer of the gas-insulated switchgear according to a second embodiment. FIG. 5 is a front view of the insulation spacer of the gas-insulated switchgear according to the second embodiment. The gas-insulated switchgear 100 according to the second embodiment differs from the gas-insulated switchgear 100 according to the first embodiment in that ground potential plates 55 are embedded in the insulation spacer 51 of the instrument transformer 50. The ground potential plates 55 are each placed between a corresponding pair of the transformers 53 and the current transformers 54, and are bent at positions nearer to the center of the insulation spacer 51 to cover the transformers 53.

The gas-insulated switchgear 100 according to the second embodiment includes the ground potential plates 55 placed adjacent to the respective transformers 53, thereby making each of the transformers 53 less susceptible to induction from another one of the transformers 53 of a different phase. This can improve accuracy of detection of an anomalous voltage.

### Third Embodiment.

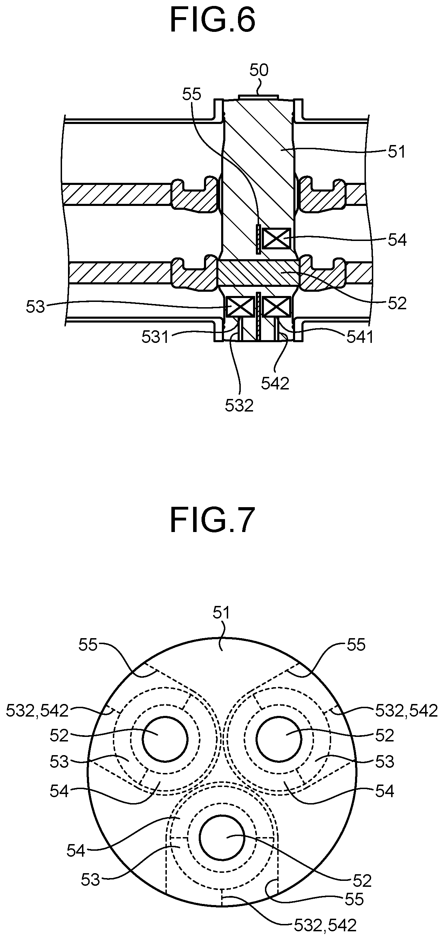

FIG. 6 is a cross-sectional view of the instrument transformer of the gas-insulated switchgear according to a third embodiment. FIG. 7 is a front view of the insulation spacer of the gas-insulated switchgear according to the third embodiment. The gas-insulated switchgear 100 according to the third embodiment differs from the gas-insulated switchgear 100 according to the second embodiment in that the transformers 53 of the instrument transformer 50 each have an incomplete ring shape. In addition, the gas-insulated switchgear 100 according to the third embodiment is configured in which the ground potential plates 55 are placed only in portions between the transformers 53 and the current transformers 54, and the ground potential plates 55 do not cover the respective transformers 53 along the radial direction of the main circuit conductors 52.

The gas-insulated switchgear 100 according to the third embodiment includes the transformers 53 each having an incomplete ring shape. This enables the transformers 53 to be installed coaxially with the main circuit conductors 52, from a position in the radial direction of the main circuit conductors 52. This can facilitate the work of installation of the transformers 53 to be coaxial with the main circuit conductors 52 in the mold for casting the insulation spacer 51.

### Fourth Embodiment.

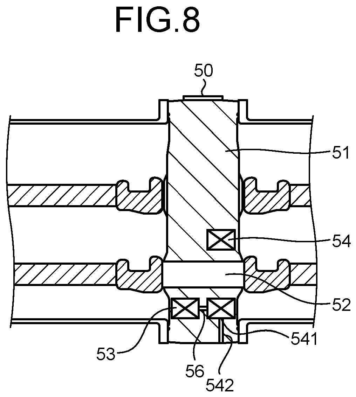

FIG. 8 is a cross-sectional view of the instrument transformer of the gas-insulated switchgear according to a fourth embodiment. The gas-insulated switchgear 100 according to the fourth embodiment differs from the gas-insulated switchgear 100 according to the first embodiment in that the transformers 53 and the current transformers 54 of the instrument transformer 50 are joined to each other in pairs by insulating support members 56, which have been cast integrally with the insulation spacer 51.

In the mold for casting the insulation spacer 51, the current transformers 54 are supported from the outer circumference side by support members so as to be placed coaxially with the main circuit conductors 52. In the mold for casting the insulation spacer 51, the support members that support the current transformers 54 may be the conductors 542 connected to the secondary terminals of the respective current transformers 54. In addition, the transformers 53 are fixed to the current transformers 54 by the insulating support members 56 to be thereby placed coaxially with the main circuit conductors 52.

The instrument transformer 50 of the gas-insulated switchgear 100 according to the fourth embodiment enables the transformers 53 to be placed coaxially with the main circuit conductors 52 by placing the current transformers 54 coaxially with the main circuit conductors 52, provided that the transformers 53 are previously fixed to the current transformers 54 using the insulating support members 56 to cause the centers of the transformers 53 and the centers of respective corresponding ones of the current transformers 54 to be positioned coaxially with each other. This can simplify the work of producing the gas-insulated switchgear 100 and improve production efficiency.

The configurations described in the foregoing embodiments are merely examples of aspects. These configurations may be combined with another known technology, and part of such configurations may be omitted and/or modified without departing from the spirit.

### Reference Signs List

20 circuit breaker; 31, 32 grounded switchgear; 41, 42 disconnector; 50 instrument transformer; 51 insulation spacer; 52 main circuit conductor; 53 transformer; 54 current transformer; 55 ground potential plate; 56 insulating support member; 70 busbar; 80 bushing; 91, 92, 93 connecting busbar; 100 gas-insulated switchgear; 531, 541 secondary terminal; 532, 542 conductor.

## Claims

1. A gas-insulated device comprising:
a grounded tank divided into a plurality of zones each filled with gas; and
an instrument transformer including, in combination, a current transformer for detecting an anomalous current and a transformer for detecting an anomalous voltage, wherein
the instrument transformer includes:
an insulation spacer adapted to form the zones; and
a main circuit conductor adapted to penetrate through the insulation spacer, wherein
the current transformer has an annular shape,
the transformer has a shape forming at least part of an annular shape, and
the current transformer and the transformer are embedded in the insulation spacer to cause a center of the current transformer and a center of the transformer to be positioned on a central axis of the main circuit conductor.

2. The gas-insulated device according to claim 1, wherein the instrument transformer includes:
the main circuit conductor;
the current transformer; and
the transformer correspondingly to each of a plurality of currents having phases different from each other.

3. The gas-insulated device according to claim 2, wherein
a ground potential plate is embedded in the insulation spacer, adjacent to the transformer, the ground potential plate is adapted to suppress an induced current that would be caused to occur in the transformer placed adjacent to the ground potential plate by the transformer having another phase.

4. The gas-insulated device according to claim 1 or 2, wherein
an insulating support member adapted to fix the current transformer and the transformer is embedded in the insulation spacer.
